# FASCICULE DE BREVET EUROPEEN

(11) **EP 2 925 681 B1**
(45) Date de publication et mention de la délivrance du brevet: **13.12.2017**
(21) Numéro de dépôt: 13820792.3
(22) Date de dépôt: 28.11.2013
(51) Int. Cl.: C02F 11/14, C02F 1/56, C08B 31/12, C02F 1/52

(54) **PROCEDE D'EPAISSISSEMENT OU DE DESHYDRATATION DE BOUES**
VERFAHREN ZUM EINDICKEN ODER ENTWÄSSERN VON SCHLAMM
METHOD FOR THICKENING OR DEHYDRATING SLUDGE

(30) Priorité: 28.11.2012 FR 1261342
(43) Date de publication de la demande: 07.10.2015
(73) Titulaire: Roquette Frères, 62136 Lestrem (FR)
(72) Inventeur: CROWTHER-ALWYN, Laura, F-59280 Armentieres (FR); CARRE, Medhi, F-62118 Pelves (FR); SIMON, Michel, F-80260 St Gratien (FR)
(74) Mandataire: Cabinet Plasseraud
(86) Numéro de dépôt international: PCT/FR2013/052884
(87) Numéro de publication internationale: WO 2014/083283

(56) Documents cités:
- US-A1- 2004 112 559
- SVETLANA BRATSKAYA ET AL: "Effect of Polyelectrolyte Structural Features on Flocculation Behavior: Cationic Polysaccharides vs. Synthetic Polycations", MACROMOLECULAR MATERIALS AND ENGINEERING, vol. 290, no. 8, 12 août 2005 (2005-08-12) , pages 778-785, XP055065180, ISSN: 1438-7492, DOI: 10.1002/mame.200400403

## Description

### Domaine de l'invention

La présente invention concerne des procédés d'épaississement ou de déshydratation de boues mettant en oeuvre au moins un amidon cationique et un polyacrylamide cationique.

### Etat de la technique

Le traitement des eaux résiduaires issues des activités humaines et industrielles conduit à la production de boues. De manière générale, les boues à traiter sont constituées majoritairement d'eau dans laquelle est intimement dispersée de la matière organique. Ces boues subissent une opération de séparation mécanique de la matière organique et de l'eau comprise dans la boue. Ces opérations sont comprises dans des procédés d'épaississement où l'étape de séparation mécanique est généralement réalisée sur une table d'égouttage ou par flottation ou encore dans des procédés de déshydratation des boues qui utilisent souvent des techniques de centrifugation, de filtre presse ou de filtre à bande. Ces procédés visent à obtenir des boues concentrées de forte siccité, c'est-à-dire à concentrer au maximum la matière sèche de la boue et à éliminer l'eau produite. Les boues ainsi traitées sont, selon leur origine, ensuite transportées vers un site de décharge, d'épandage agricole ou d'incinération.

Les procédés actuels d'épaississement ou de déshydratation des boues nécessitent l'ajout d'agents floculant dans la boue à traiter. Ceci va avoir pour effet de produire de la matière organique concentrée sous forme de flocs dispersés dans de l'eau. Ces flocs sont ensuite séparés de l'eau produite par les opérations mécaniques de séparation précédemment citées. Or, ces dernières peuvent imposer des contraintes mécaniques sur les flocs formés lors de leur séparation et il est donc nécessaire que ces flocs aient la résistance mécanique nécessaire pour pouvoir subir ces contraintes.

Industriellement, on utilise pour cela à ce jour principalement des polymères de type polyacrylamide. En effet, les boues concentrées préalablement floculées par ces polymères ont généralement une siccité très élevée. De plus, les flocs ont une résistance très élevée et l'opération d'épaississement ou de déshydratation mécanique se fait donc aisément. Cependant, différents problèmes sont liés à leur utilisation. Tout d'abord, ces polymères sont fabriqués à partir d'un monomère, l'acrylamide, qui est entré dans l'annexe I des classifications harmonisées au niveau européen par la 28^{ème} adaptation au progrès technique (APT) de la directive 67/548/CE du 6 août 2001, où il est notamment classé comme toxique en cas d'ingestion et pouvant causer des altérations génétiques ou le cancer. Les risques liés à la fabrication et l'utilisation de l'acrylamide sont donc réels. La présence de traces de monomère dans le polymère soulève également de nombreuses polémiques sur l'utilisation de polyacrylamides, notamment dans certains pays comme l'Allemagne. De plus, l'utilisation du polyacrylamide pour le traitement de boues a tendance à colmater les filtres lorsque ceux-ci sont utilisés pour séparer les flocs de l'eau. Un autre problème est également que ces polyacrylamides ont un coût relativement élevé.

Une autre solution est d'utiliser, en lieu et place de polyacrylamides, des amidons cationiques. Ces produits ont l'avantage d'être fabriqués à partir d'amidon, qui est une ressource renouvelable. Dans le domaine plus général du traitement de l'eau et non relatif au traitement des boues, on peut citer le document Bratskaya et al., Macromol. Mater. and Eng., 2005, 290, Pages 778-785, qui décrit l'utilisation d'amidons cationiques de différente nature comme floculant pour une solution aqueuse de kaolin à faible concentration (jusqu'à 1 g/L de kaolin). Ces floculants à base d'amidon permettent de résoudre les problèmes du polyacrylamide dans la mesure où ils sont moins coûteux et, de manière générale, sont fabriqués à partir de produits moins toxiques pour l'homme ou son environnement. Un autre avantage est que, lors d'une étape de séparation de flocs et d'eau par filtration, il n'est pas observé de colmatage des filtres lorsqu'on utilise ces amidons cationiques comme agent floculant, contrairement à lorsque l'on utilise des polyacrylamides. Cependant, les flocs formés à l'aide de ces amidons cationiques ont une résistance très faible en comparaison avec ceux obtenus à partir de polyacrylamide. Les boues concentrées obtenues à l'issue de l'étape d'épaississement ou de déshydratation présentent également l'inconvénient d'avoir une siccité plus faible que dans le cas où on utilise du polyacrylamide.

Il est également déjà connu d'utiliser deux floculants de charge opposées dans un procédé séquencé. Ainsi, dans le brevet US 4,382,864 est décrit un procédé de déshydratation des boues dans lequel on réalise dans une première étape de formation de flocs par ajout d'un premier floculant sous forte agitation, une seconde étape de floculation par l'ajout d'un second floculant de charge opposée au premier sous une agitation plus faible permettant d'augmenter la taille des flocs. Les floculants, anioniques et cationiques, peuvent être un polyacrylamide et un amidon. Ce procédé, comprenant au moins deux étapes de floculation successives, est relativement complexe à mettre en place et demande un réglage précis de la vitesse d'agitation pour chacune des étapes de floculation.

### Résumé de l'invention

Il existe donc encore à ce jour un besoin de trouver des procédés d'épaississement ou de déshydratation, utilisant de faibles quantités de polyacrylamide et pouvant être facilement mis en oeuvre, ces procédés permettant d'obtenir des boues de siccité élevées, et dans lesquels les flocs formés lors de ce procédé présentent une résistance mécanique suffisante pour permettre une séparation mécanique aisée des flocs et de l'eau.

Ceci est justement ce que permet la présente invention qui concerne un procédé d'épaississement ou de déshydratation d'une boue comprenant au moins :
a) une étape d'addition de floculants dans la boue à traiter ;
b) une étape de floculation par agitation de la boue ainsi additionnée pour former un mélange de flocs et d'une solution aqueuse ;
c) une étape de séparation mécanique des flocs et de la solution aqueuse formés à l'étape précédente ;
d) une étape de récupération de la solution aqueuse et des flocs formant une boue traitée ;
dans lequel :
- les floculants additionnés sont constitués d'au moins un amidon cationique (A) et d'au moins un polyacrylamide cationique (P) ;
- le ou les amidons cationiques (A) comprennent un pourcentage massique en azote fixé d'au moins 2,5 %
- et le rapport des masses (R) m_{A}/(m_{A}+m_{P}) exprimées en masse sèche, est compris entre 0,6 et 0,95.

Ce procédé, utilisant des floculants de même charge, cationique, permet d'obtenir un excellent compromis et de se rapprocher, d'égaler, voire même de dépasser les résultats obtenus avec un procédé utilisant seul comme floculant un amidon cationique ou un polyacrylamide cationique.

Il est décrit dans la demande de brevet US 2004/0112559 A1, au nom de la Demanderesse, une composition comprenant un amidon cationique fluidifié. Cet amidon cationique comprend au plus 1,5% d'azote fixé. Cette composition peut être utilisée pour le traitement d'eaux industrielles. Par ailleurs, la composition amylacée peut également être associée à un polyacrylamide.

Comme montré dans les exemples, ces amidons cationiques utiles au traitement d'eaux industrielles et qui comprennent au plus 1,5% d'azote fixé, ne permettent pas d'être suffisament efficaces dans des procédés d'épaississement ou de déshydratation de boues lorsqu'ils sont en association avec un polyacrylamide cationique.

### Description détaillée de l'invention

L'invention porte sur un procédé de traitement des boues, plus précisément un procédé d'épaississement ou de déshydratation, dans lequel on utilise différents floculants cationiques des boues, c'est-à-dire majoritairement de l'amidon cationique (A) et minoritairement du polyacrylamide cationique (P).

L'amidon cationique comprend un pourcentage massique en azote fixé d'au moins 2,5 %. L'amidon cationique utilisé dans le cadre de l'invention peut être obtenu à partir de tout type d'amidon natif d'origine naturelle ou hybride, y compris d'amidon issu d'organismes végétaux ayant subi des mutations ou manipulations génétiques. Lesdits amidons peuvent notamment être issus de pomme de terre, de pomme de terre à haute teneur en amylopectine (pomme de terre waxy), de blé, de blé à haute teneur en amylopectine (blé waxy), de maïs, de maïs à haute teneur en amylopectine (maïs waxy), de maïs à haute teneur en amylose, de riz, de pois, d'orge ou de manioc, des coupes ou fractions qui peuvent en être faites, et les mélanges quelconques d'au moins deux quelconques des produits susmentionnés. La sélection de cet amidon natif a par exemple une influence sur la masse moléculaire finale ainsi que sur son taux de branchement, liée à la teneur en amylose et en amylopectine. Selon l'invention, l'amidon cationique est préférentiellement obtenu à partir d'amidon de maïs, de blé, de maïs waxy ou à partir de fécule de pomme de terre, tout préférentiellement à partir de fécule de pomme de terre.

La réaction de cationisation peut être effectuée à l'aide de réactifs cationiques tels que décrits par exemple dans « Starch Chemistry and Technology » - Vol. II - Chapter XVI - R.L. WHISTLER and E.F. PASCHALL - Academic Press (1967). L'amidon est introduit dans un réacteur en présence de ces réactifs.

La réaction est généralement réalisée en phase colle. Par « phase colle », on entend que l'amidon est au moins partiellement solubilisé, généralement totalement solubilisé, dans une phase solvant, ladite phase solvant étant généralement une phase aqueuse ou une phase hydroalcoolique. On obtient alors à la fin de ce procédé un amidon cationique sous forme d'une une composition amylacée liquide. Il est également possible d'obtenir l'amidon cationique sous forme solide par séchage de la composition ou encore par précipitation dans de l'alcool ou un solvant hydroalcoolique.

De préférence, la réaction de cationisation est effectuée avec des réactifs azotés à base d'amines tertiaires ou de sels d'ammonium quaternaires. Parmi ces réactifs, on préfère utiliser les chlorhydrates de 2-dialkylaminochloréthane tels que le chlorhydrate de 2-diéthylaminochloréthane ou les halogénures de glycidyl-triméthylammonium et leurs halohydrines, tels que le chlorure de N-(3-chloro-2-hydroxypropyl)-triméthylammonium, ce dernier réactif étant préféré.

On procède généralement à cette réaction en milieu alcalin, à un pH supérieur à 8, voire supérieur à 10, le pH pouvant être ajusté par exemple par de la soude.

Les taux de réactif mis en oeuvre sont choisis de telle sorte que les amidons cationiques résultants présentent le pourcentage d'azote qui a été fixé sur l'amidon. L'amidon cationique (A) selon l'invention présente un pourcentage massique en azote fixé d'au moins 2,5%. Préférentiellement, l'amidon cationique (A) présente un pourcentage massique en azote fixé allant de 2,5 à 5%.

Les quantités d'azote fixé sont classiquement déterminées par la méthode de Kjeldahl.

De manière non limitative, on peut utiliser les procédés décrits dans les documents WO 2007121981, EP 737210, WO 9962957, US 2995513, US 3842005, US 4579944.

Selon l'invention, l'amidon cationique peut être additionné lors de l'étape a) du procédé par l'intermédiaire d'une composition amylacée liquide comprenant au moins un amidon cationique. Cette variante présente l'avantage d'être facile à mettre en oeuvre dans des installations industrielles. De préférence, la concentration massique en amidon cationique de cette composition additionnée lors de l'étape a) va de 0,1 à 20g/L.
Pour réaliser cette composition amylacée, il peut être nécessaire de solubiliser l'amidon cationique dans le solvant si cet amidon cationique est sous forme solide. L'amidon cationique (A) utile à l'invention peut être soluble dans l'eau froide. Il peut par exemple être sous la forme d'une poudre soluble dans l'eau froide. La composition amylacée liquide est généralement une composition aqueuse, qui peut comprendre principalement comme solvant de l'eau et éventuellement de faibles quantités de solvants organiques miscibles avec l'eau, comme les alcools tels que l'éthanol, par exemple dans des quantités de solvant organique inférieures à 10% en masse de la totalité des solvants. Cependant, il est également possible d'utiliser une composition amylacée liquide issue du procédé de cationisation en phase colle précédemment décrit.

Selon une variante avantageuse de l'invention, on utilise une composition amylacée liquide d'amidon cationique exempte d'agent conservateur.

Lorsque l'amidon cationique est sous forme d'une composition amylacée liquide, on peut observer une dégradation microbienne lors de son stockage et du transport du produit. Pour limiter ce phénomène, on peut ajouter un agent biocide, qui peut être choisi parmi les phtalates, par exemple un de ceux commercialisés par Dow Chemical Company sous la marque VINYZENE™. Or, bien que la concentration en agent biocide nécessaire à la conservation de l'amidon sous forme de solution liquide soit faible, ces agents biocides peuvent constituer des constituants non désirés pour le traitement d'une boue, la boue traitée pouvant par exemple être épandue à l'issue du procédé de traitement. Le fait que l'amidon soit stocké et transporté sous forme solide limite les problèmes de dégradation. Ceci permet de s'affranchir de l'ajout d'un agent conservateur, ceci pouvant être particulièrement intéressant dans un procédé de traitement de l'eau.

La composition amylacée comprenant l'amidon cationique peut comprendre en outre des constituants additionnels, tels que des agents biocides décrits ci-dessus.

Selon le procédé de l'invention, le polyacrylamide (P) utilisé est du polyacrylamide cationique.

En ce qui concerne le polyacrylamide cationique, il est de préférence de haut poids moléculaire, en particulier de poids moléculaire Mₙ d'au moins 1.10⁶ g.mol⁻¹. De manière avantageuse, le poids moléculaire du polyacrylamide Mₙ va de 1.10⁶ à 20.10⁶ g.mol⁻¹, notamment de 1.10⁶ à 15.10⁶ g.mol⁻¹. Le polyacrylamide cationique utilisé peut être sous une forme linéaire ou sous une forme ramifiée. Ledit polyacrylamide peut être cationique jusqu'à 100 % en charge et, de préférence, entre 0,1 et 55 %, par exemple entre 0,1 et 25 %, en charge. De manière alternative, on peut quantifier le niveau de cationicité du polyacrylamide à l'aide d'un détecteur de flux de type *Streaming Current Detector* (SCD), par titration à l'aide de polyéthylènesulfonate de sodium. Préférentiellement, le niveau de cationicité du polyacrylamide va de 500 à 5000 µeq/g, de préférence de 2000 à 4500 µpeq/g.

Le polyacrylamide cationique peut être choisi parmi les copolymères de polyacrylamide avec des monomères cationiques ou les polyacrylamides modifiés selon la réaction de Mannich. Comme exemples de copolymères polyacrylamides cationiques, on peut citer les copolymères acrylamide / halogénure de diallyldialkylammonium, de préférence chlorure de diallyldialkylammonium, les copolymères diaminoalkyl(méth)acrylate / acrylamide et les copolymères dialkylaminoalkyl(méth)acrylate / acrylamide, les copolymères trialkylaminoalkyl(méth)acrylate, les groupements alkyles comprenant de préférence de 1 à 6 atomes de carbone.

Selon l'invention, le polyacrylamide cationique peut être additionné lors de l'étape a) du procédé par l'intermédiaire d'une composition liquide comprenant au moins un polyacrylamide cationique. Cette variante présente l'avantage d'être facile à mettre en oeuvre dans des installations industrielles. De préférence, la concentration massique en polyacrylamide cationique dans cette composition va de 0,1 à 20g/L.

Le polyacrylamide cationique utile à l'invention peut être soluble dans l'eau froide. Il peut par exemple être sous la forme d'une poudre soluble dans l'eau froide.
La composition liquide de polyacrylamide cationique est généralement une composition aqueuse, qui peut comprendre principalement comme solvant de l'eau et éventuellement de faibles quantités de solvants organiques miscibles avec l'eau, comme les alcools tels que l'éthanol, par exemple dans des quantités de solvant organique inférieures à 10% en masse de la totalité des solvants.

Selon l'invention, l'amidon cationique et le polyacrylamide cationique sont additionnés dans la boue à traiter lors de l'étape a) selon un rapport des masses (R) m_{A}/(m_{A}+m_{P}), exprimées en masse sèche, compris entre 0,6 et 0,95.

Sauf si explicitement précisé, il est indiqué que les quantités en amidon cationique et en polyacrylamide, donc en floculants, sont exprimées en masse sèche.

R est avantageusement compris entre 0,7 et 0,95, de préférence compris entre 0,85 et 0,95, tout préférentiellement entre compris entre 0,87 et 0,94.
Lors du procédé selon l'invention, l'amidon cationique et le polyacrylamide cationique peuvent être additionnés séparément ou simultanément lors de l'étape a). Selon la variante où les floculants sont additionnés simultanément, l'étape d'addition peut se faire par l'intermédiaire de l'addition d'une composition liquide comprenant au moins un amidon cationique et au moins un polyacrylamide cationique.

Les floculants sont utilisés dans le procédé de l'invention dans des quantités permettant de floculer la boue à traiter. Ces quantités pourront être adaptées par l'homme du métier en fonction du type de boue à traiter. De la même manière, les quantités seront adaptées par l'homme du métier en fonction de la résistance mécanique des flocs désirée pour pouvoir réaliser de manière satisfaisante les étapes de floculation b) et de séparation mécanique c) qui sont détaillées ci-après.
Les quantités de boue à traiter par les floculants sont également exprimées en masse sèche de boue à traiter.

Selon le procédé de l'invention, la quantité totale d'amidon cationique et de polyacrylamide peut aller de 1 à 50 g/kg de boue à traiter (sec/sec), avantageusement de 3 à 35 g/kg (sec/sec), préférentiellement de 4 à 20 g/kg (sec/sec).
Selon le procédé de l'invention, les floculants peuvent être additionnés dans la boue en une seule dose, ou par l'addition de différentes doses. Dans le cas d'un procédé continu de traitement des boues, il est possible d'additionner la boue à traiter par l'addition continue de floculants.

Bien que leur utilisation ne soit pas nécessaire pour réaliser le procédé selon l'invention, on peut également additionner lors de l'étape a) d'autres produits classiquement utilisés dans le traitement de boues, notamment des agents coagulants, voire un ou plusieurs floculants autres que le ou les polyacrylamides cationiques (P) et amidons cationiques (A) utiles à l'invention. Ces autres floculants, définis selon la présente demande comme « floculants additionnels », peuvent être des polysaccharides anioniques ou cationiques autres que les amidons cationiques (A) ou encore peuvent être des polyacrylamides anioniques. Avantageusement, les quantités massiques de floculants additionnels sont inférieures à 50 g/kg (sec/sec)de boue à traiter, avantageusement inférieures à 30 g/kg (sec/sec), préférentiellement inférieures à 10 g/kg (sec/sec). Tout préférentiellement, on n'ajoute pas de floculants additionnels dans le procédé de l'invention.

La boue à traiter à l'étape a) peut être de tout type et notamment être issue de tout type d'activité humaine et industrielle. Le procédé selon l'invention est particulièrement utile lorsque la boue est issue d'effluents urbains ou lorsqu'il s'agit de boues industrielles, notamment de boues issues de l'industrie agroalimentaire telles que les boues issues d'amidonnerie, de papeteries, d'industries chimiques. Le procédé selon l'invention est particulièrement efficace pour les boues comprenant de la matière organique en suspension. Selon le procédé de l'invention, la boue à traiter peut, avant addition des floculants à l'étape a), subir un prétraitement, par exemple un prétraitement de digestion par des bactéries ou un prétraitement par des agents chimiques. La boue à traiter peut notamment, selon le procédé de l'invention, subir un prétraitement à l'aide d'agents coagulants, par exemple à l'aide de sels métalliques. La boue à traiter est généralement une composition aqueuse comprenant de l'eau et des matières en suspension, la quantité de matières en suspension étant supérieure ou égale à 0,2% de la masse de la composition aqueuse.
L'étape b) du procédé consiste en une étape de floculation par agitation de la boue additionnée par les floculants pour former un mélange de flocs et d'une solution aqueuse. Cette étape est classiquement conduite dans un floculateur.
Comme expliqué précédemment, l'amidon cationique (A) et le polyacrylamide (P) peuvent être introduits séparément, avec un délai entre chacune des introductions. Ce délai est généralement inférieur à quelques minutes, par exemple inférieur à 1 minute. Il est donc possible de réaliser une première étape de floculation après une première étape d'addition d'un premier floculant puis une seconde étape de floculation après une seconde étape d'addition d'un second floculant.
Toutefois, il est préférable, pour des raisons de simplicité de procédé de ne conduire qu'une seule étape de floculation b) après une étape d'addition a) d'une composition comprenant (A) et (P).

L'invention a donc également pour objet une composition, apte à être utilisée dans le procédé selon l'invention, comprenant au moins un amidon cationique (A) et d'au moins un polyacrylamide cationique (P) dans laquelle :
- le ou les amidons cationiques (A) comprennent un pourcentage massique en azote fixé d'au moins 2,5 % ;
- et le rapport des masses (R) m_{A}/(m_{A}+m_{P}) exprimées en masse sèche, est compris entre 0,6 et 0,95.
Les variantes préférées décrites précédemment pour le procédé selon l'invention concernant (A), (P) et leurs proportions relatives sont également des variantes préférées de la composition selon l'invention.

La composition selon l'invention est généralement sous forme d'une composition liquide comprenant au moins un amidon cationique et au moins un polyacrylamide cationique solubilisés. Cette composition selon l'invention présente l'avantage d'être facile à mettre en oeuvre dans des installations industrielles. Pour réaliser cette composition liquide selon l'invention, on peut solubiliser un amidon cationique sous forme solide dans un solvant. L'amidon cationique utile à l'invention peut être soluble dans l'eau froide. Il peut par exemple être sous la forme d'une poudre soluble dans l'eau froide. La composition liquide selon l'invention, on peut solubiliser un amidon cationique et un polyacrylamide cationique, tous deux sous forme solide, dans un solvant. La composition liquide selon l'invention peut également être fabriquée en solubilisant un polyacrylamide cationique dans une colle d'amidon cationique. La composition liquide selon l'invention est généralement une composition aqueuse, qui peut comprendre principalement comme solvant de l'eau et éventuellement de faibles quantités de solvants organiques miscibles avec l'eau, comme les alcools tels que l'éthanol, par exemple dans des quantités de solvant organique inférieures à 10% en masse de la totalité des solvants.
On préfère que, par rapport à la masse totale de la composition, la quantité massique de la somme d'amidon cationique et de polyacrylamide cationique aille de 0,01 à 70%, avantageusement de 20 à 60% et préférentiellement de 30 à 50%.
Lorsque l'on souhaite transporter ou stocker cette composition, on préfère que la quantité massique de la somme d'amidon cationique et de polyacrylamide cationique dans ladite composition aille de 10 à 70%, avantageusement de 20 à 60%, préférentiellement de 30 à 50%.
Lorsque l'on souhaite utiliser la composition dans le procédé selon l'invention, on préfère que la quantité massique de la somme d'amidon cationique et de polyacrylamide cationique aille de 0,01 à 2%.

Selon le procédé de l'invention, la boue floculée obtenue à l'étape b) est soumise à au moins une étape c) de séparation mécanique, ceci afin de séparer flocs et solution aqueuse obtenus précédemment.
Selon un mode de réalisation, cette étape c) est réalisée en traitant la boue floculée obtenue à l'étape b) par passage sur une table d'égouttage, centrifugation et/ou par flottation. Ces techniques sont généralement utilisées lorsque l'on souhaite réaliser un procédé d'épaississement de la boue. Ces procédés permettent généralement d'obtenir une siccité moyenne de la boue, cette siccité allant de 4 à 10%, souvent de 5 à 7%. La boue ainsi obtenue est généralement sous forme liquide.
Selon un autre mode de réalisation, cette l'étape c) est réalisée en traitant la boue floculée obtenue à l'étape b) par centrifugation et/ou par passage sur filtre presse ou filtre à bande. Ces techniques sont généralement utilisées lorsque l'on souhaite réaliser un procédé de déshydratation de la boue. Ces procédés permettent, selon la technique utilisée, d'obtenir une siccité élevée de la boue, cette siccité allant généralement supérieure à 10% et allant jusqu'à 40%. Il faut noter que la centrifugation est une technique permettant, selon le réglage de la centrifugeuse choisi parmi l'homme du métier, d'obtenir une siccité de la boue traitée moyenne ou élevée.
Selon l'invention, le procédé peut comprendre différentes étapes successives de séparation. A titre d'exemple, il est possible de réaliser un procédé de déshydratation de boue comprenant une première étape de séparation par passage sur une table d'égouttage, centrifugation et/ou par flottation puis une seconde étape de séparation par centrifugation et/ou par passage sur filtre presse ou filtre à bande.

Grâce à l'association particulière de floculants de type polyacrylamide et d'amidon, le procédé selon l'invention permet d'éliminer de grandes quantités d'eau dans la boue à traiter, avec des résultats se rapprochant, voire dépassant pour certaines propriétés, ceux obtenus avec des procédés similaires utilisant exclusivement des polyacrylamides cationiques. Ceci permet ainsi d'utiliser de plus faibles quantités de polyacrylamide par rapport aux procédés déjà connus tout en conservant un procédé efficace. En particulier, la boue traitée selon le procédé de l'invention peut présenter à issue de l'étape d) présente une siccité d'au moins 4%, généralement allant de 4 à 60%, généralement ne dépassant pas 40%, avantageusement supérieure à 10%, préférentiellement d'au moins 20%.

Selon le procédé de l'invention, les étapes successives a), b), c) et d) peuvent être réalisées une ou plusieurs fois. Cela signifie que la boue traitée récupérée à l'étape d) peut éventuellement subir un autre traitement des étapes successives a), b), c) et d).

L'invention va maintenant être illustrée dans les exemples suivants, non limitatifs de la présente invention.

### Exemple 1 : Etude de l'effet de la cationicité de l'amidon

Des solutions de fécule de pomme de terre cationisée sont préparées en suivant l'enseignement du brevet US 4579944, ces fécules présentant différents niveaux de cationicité, exprimée en pourcentage d'azote fixé (%N), ce pourcentage étant précisé dans le tableau 1.

**Tableau 1**

| Produit | %N |
|---|---|
| Amidon 1 | 1,2 |
| Amidon 2 | 1,5 |
| Amidon 3 | 2,0 |
| Amidon 4 | 3,0 |
| Amidon 5 | 4,0 |

On utilise également comme floculant un polyacrylamide cationique (FLOPAM DW 2160 commercialisé par la société SNF, sous forme de poudre à 83,5% de matière sèche, présentant une charge ionique (SCD) de +2900µeq/g), ci-après dénommé PAM. Il est préalablement préparé sous forme de solution à 1% sous agitation magnétique pendant 1h avant utilisation pour le traitement des boues.

Ces solutions d'amidon cationique sont testées en Jar-Test comme floculant pour des boues de station d'épuration issues d'une amidonnerie, conjointement avec le polyacrylamide cationique, avec un rapport massique R m_{A}/(m_{A}+m_{P}) égal à 0,8 (sec/sec), pour un total de 18 grammes de produit sec par kilogramme de boue sèche (g/kg de boue sèche). Un test de référence est réalisé avec le polyacrylamide seul à une dose équivalente, soit 3,6g/kg de boue sèche. Les caractéristiques de la boue à traiter sont données dans le tableau 2.

**Tableau 2**

| | |
|---|---|
| Matière sèche | 1,5% |
| Demande chimique en oxygène | 18,30 g/L |
| Matières en suspension | 18,10 g/L |
| Calcium | 604 mg/kg |

La solution de polyacrylamide est tout d'abord ajoutée sous agitation pendant 10 secondes à 200 tours par minute (tpm). Puis, la solution d'amidon est ajoutée sous agitation pendant 30 secondes à 45 tpm. Les résultats de floculation sont alors exprimés en taille des flocs dans le bécher (note de 0 à 10 : 0 = pas de flocs visibles ; 10 = très gros flocs). Puis, la boue floculée est filtrée sur un tamis de maille 500µm ; on évalue alors :
- la qualité des flocs retenus sur le tamis (note de 0 à 10 : 0 = pas de flocs visibles ; 10 = très gros flocs) ;
- la vitesse de filtration au travers du tamis (en volume recueilli au cours du temps, en ml/s) ;
- la quantité de flocs traversant le tamis (% massique de flocs dans le filtrat) ;
- la turbidité du filtrat (en UTN).
Les résultats sont donnés dans le tableau 3.

**Tableau 3**

| %N de l'amidon | Flocs bécher | Flocs tamis | Turbidité du filtrat (UTN) | % de flocs dans le filtrat | Volume de filtrat (ml/s) | | |
|---|---|---|---|---|---|---|---|
| | | | | | 10s | 30s | 300s |
| Sans amidon (PAM) | 2 | 1 | 70.0 | 56.7 | 150 | 190 | 300 |
| 1,2 | 3 | 2 | 17,0 | 14,0 | 130 | 180 | 285 |
| 1,5 | 4 | 2 | 17,0 | 13,0 | 120 | 190 | 280 |
| 2,0 | 6 | 3 | 18,0 | 8,3 | 210 | 260 | 300 |
| 3,0 | 8 | 5 | 14,0 | 6,3 | 260 | 290 | 315 |
| 4,0 | 9 | 8 | 16,0 | 3,2 | 270 | 290 | 310 |

Une nette amélioration de la floculation est observée lorsque le taux d'azote de l'amidon est supérieur ou égal à 2%. En particulier, l'amidon améliore la capacité floculante de manière à générer plus de flocs suffisamment gros pour être retenus sur le tamis. La filtration est rapide puisque 70% du volume de filtrat a traversé le tamis après 10 secondes seulement. De plus, le pourcentage de flocs dans le filtrat est inférieur à 10%, ce qui est similaire aux valeurs obtenues avec les floculants synthétiques du marché. Le polyacrylamide n'explique pas seul une telle efficacité puisqu'à dose équivalente en l'absence d'amidon le résultat est médiocre.

### Exemple 2 : Etude d'une addition simultanée ou séparée

Dans cet exemple, des floculants à base d'Amidon 5 et de PAM sont testés en jar test selon deux modes d'addition, à différents ratios. La dose totale de floculants est de 32 g/kg.

La boue est la même que dans l'exemple précédent, ainsi que le protocole à l'exception du temps et de la vitesse d'agitation.
- Addition en 1 temps (« Temps 1 »): Ajout des deux produits en même temps avec une agitation à 200 tr/min pendant 5s, par l'intermédiaire d'une composition unique comprenant le PAM et l'amidon.
- Addition en 2 temps (« Temps 2 »): Ajout du PAM à une agitation de 200 tr/min pendant 10s puis ajout de l'amidon à une agitation de 45 tr/min pendant 40s.

On détermine le pourcentage d'efficacité, au regard de la résistance des flocs en rhéologie, mais aussi le pourcentage de flocs dans le filtrat.

La mesure de la résistance des flocs consiste en la mesure de la contrainte à laquelle les flocs sont détruits lorsque les flocs retenus sur le tamis sont testés sur un rhéomètre de type AR2000 en utilisant une géométrie de mesure de type cylindres concentriques à une fréquence de 1 Hz à 20°C, la contrainte augmentant de 0,02 à 880 Pa.

Afin de faciliter l'interprétation des résultats, les résultats sont donnés en termes de pourcentage d'efficacité. Ce pourcentage d'efficacité est calculé par rapport à la valeur de référence de 100%, qui est la contrainte obtenue pour la résistance de flocs obtenue à l'aide du procédé comprenant une addition de floculants, en un temps, pour le mélange amidon/PAM comprenant 98% en masse d'amidon. Cette référence a été choisie car il a pu être observé qu'à cette dose, le traitement de la boue est effectué très aisément et rapidement, notamment en termes de filtration des flocs sur le tamis.

Lorsque cette efficacité devient trop faible, les flocs peuvent avoir tendance à se déliter et/ou les flocs peuvent traverser le tamis et le traitement de la boue devient alors plus difficile.

Il a cependant pu être observé qu'une efficacité inférieure à 100% pouvait également suffire à traiter de façon satisfaisante la boue.

Le pourcentage d'efficacité calculé permet de classifier aisément les différents traitements.

Les résultats sont donnés dans le tableau 4.

**Tableau 4**

| % d'amidon dans le mélange | % d'efficacité | | % de flocs dans le filtrat | |
|---|---|---|---|---|
| | Temps 1 | Temps 2 | Temps 1 | Temps 2 |
| 98 | 100 | 64 | 3,1 | 6,3 |
| 85 | 128 | 100 | 0,7 | 1,4 |
| 80 | 200 | 160 | 0,3 | 0,7 |

Les résultats montrent l'intérêt d'utiliser une unique composition de floculants pour le traitement de boues selon l'invention puisqu'on améliore les résultats lorsque les produits sont ajoutés simultanément.

De manière générale, il a pu également être constaté qu'une bonne résistance des flocs permet d'obtenir des flocs qui ne traversent pas le tamis. Une bonne résistance des flocs constitue donc un bon indicateur pour comparer différents procédés de traitement des boues entre eux.

### Exemple 3 : Effet du rapport massique R et effet de la quantité de floculant

Une boue de station d'épuration est traitée à l'aide de chacune des quatre solutions à base de fécule de pomme de terre cationique de l'exemple 1 ou à l'aide d'un polyacrylamide cationique à différentes doses allant de 4 à 32 g de floculant par kg de boue sèche à traiter.

La boue et le protocole sont les mêmes que dans l'exemple 1.

On mesure, comme à l'exemple 2, le pourcentage d'efficacité pour la résistance des flocs.

Cette contrainte est exprimée en pourcentage par rapport à la valeur de référence de 100% obtenue pour les flocs obtenus avec le PAM, à une dose de 16 g/kg. Cette référence a été choisie car il a pu être observé qu'à cette dose, le traitement de la boue est effectué très aisément et rapidement, notamment en termes de filtration des flocs sur le tamis.

Les résultats pour le PAM utilisé seul sont donnés dans le tableau 5.

**Tableau 5**

| % d'efficacité | Dose de floculant en g/kg | | | |
|---|---|---|---|---|
| | 4 | 8 | 16 | 32 |
| PAM | 4 | 32 | **100** | 126 |

Les résultats pour les solutions d'amidons seules sont donnés dans le tableau 6.

**Tableau 6**

| % d'efficacité | Dose de floculant en g/kg | | | | |
|---|---|---|---|---|---|
| | 4 | 8 | 16 | 24 | 32 |
| AMIDON 1 | 3 | 4 | 8 | 10 | 16 |
| AMIDON 3 | 3 | 6 | 16 | 20 | 26 |
| AMIDON 4 | 3 | 10 | 20 | 32 | 40 |
| AMIDON 5 | 2 | 5 | 20 | 25 | 32 |

On voit ici que, quels que soient l'amidon cationique et le dosage, on ne peut atteindre l'efficacité de 100%.

On effectue maintenant un procédé de traitement des boues identique à la différence que l'on utilise en lieu et place de la solution d'amidon ou du PAM un mélange d'amidon cationique et de PAM. On fait varier le rapport massique amidon/PAM et le dosage de ce mélange.

Les résultats pour les mélanges contenant le PAM et la solution d'AMIDON 5 sont donnés dans le tableau 7.

**Tableau 7**

| Dose totale (g/kg) | % d'amidon dans le mélange | Dose d'amidon (g/kg) | Dose de PAM1 (g/kg) | % d'efficacité |
|---|---|---|---|---|
| 8 | 95 | 7,6 | 0,4 | 16 |
| 8 | 80 | 6,4 | 1,6 | 25 |
| 8 | 70 | 5,6 | 2,4 | 40 |
| 8 | 50 | 4 | 4 | 32 |
| 16 | 95 | 15,2 | 0,8 | 50 |
| 16 | 90 | 14,4 | 1,6 | 60 |
| 16 | 80 | 12,8 | 3,2 | 80 |
| 16 | 70 | 11,2 | 4,8 | 100 |
| 16 | 50 | 8 | 8 | 200 |
| 32 | 95 | 30,4 | 1,6 | 160 |
| 32 | 90 | 28,8 | 3,2 | 200 |
| 32 | 80 | 25,6 | 6,4 | 250 |

Comme expliqué précédemment, une efficacité de 100% permet d'effectuer un excellent traitement de la boue. Toutefois, cette valeur n'est qu'une référence et il est tout à fait possible de traiter la boue de manière satisfaisante en obtenant une résistance inférieure à 100%.

Des résultats ci-dessus, on conclue qu'il est donc possible d'obtenir une efficacité de 50% avec un dosage de 16g/kg, en utilisant un mélange de floculants amidon cationique/PAM comprenant seulement 5% de PAM (soit 0,8 g de PAM par kg de boue traitée). Cette efficacité est par exemple supérieure à celle obtenue pour un traitement où le floculant est uniquement constitué de PAM, à un dosage de 8g/kg.

A un dosage équivalent de 16g/kg, un traitement avec un mélange de floculants comprenant 30% de PAM (4,8 g de PAM par kg de boue traitée) est même aussi efficace qu'un traitement avec un floculant constitué de PAM seulement. Si l'on vise une efficacité de 100%, on peut également opter pour un traitement avec une dose minimale de PAM (1,6g/kg), en utilisant un mélange floculant présentant un rapport R de 0,95, à une dose de 32 g par kg de boue sèche.

On conclue que l'on peut réaliser, à l'aide du procédé selon l'invention, un traitement des boues très efficace, ceci en utilisant des quantités de polyacrylamide très limitées.

### Exemple 5 : Traitement d'une boue papetière

L'amidon 5 et le PAM sont testés en Jar-Test comme floculant pour le traitement de boues de papeterie. Les caractéristiques de la boue données dans le tableau 8.

**Tableau 8**

| | |
|---|---|
| Matière sèche | 2.3% |
| Demande chimique en oxygène | 14,50 g/L |
| Matières en suspension | 21,74 g/L |
| Calcium | 4700 mg/kg brut |

La solution d'AMIDON 5 et la solution de PAM sont testées seules ou en mélange, à une dose variable.

Comme dans l'exemple précédent, on détermine le pourcentage d'efficacité par rapport à la valeur de référence de 100% obtenue pour les flocs obtenus avec le PAM, à une dose de 16 g/kg.

En vue d'une comparaison plus facile, on calcule un pourcentage d'efficacité théorique pour les procédés utilisant un mélange, ce pourcentage théorique étant calculé en faisant la moyenne pondérale des pourcentages d'efficacité des procédés utilisant soit l'amidon seul, soit le PAM seul.

Les résultats sont donnés dans le tableau 9.

**Tableau 9**

| Produits | Dose en floculant (g/kg) | % d'efficacité | % d'efficacité théorique |
|---|---|---|---|
| Boue brute | 0 | 0% | |
| PAM | 4 | 20% | |
| | 16 | 100% | |
| | 32 | 125% | |
| AMIDON 5 | 4 | 8% | |
| | 16 | 25% | |
| | 32 | 15% | |
| PAM / AMIDON 5 (10/90) | 4 | 16% | 9,2% |
| | 16 | 40% | 32,5% |
| | 32 | 125% | 26% |

Sur cette boue, le pourcentage d'efficacité de l'AMIDON 5 utilisé seul reste faible, ceci quelle que soit la quantité de floculant utilisée.

Le PAM permet de réaliser un procédé de traitement des boues efficace.

Dans le cas des procédés utilisant des mélanges, on réussit à améliorer dans tous les cas la résistance des flocs par rapport à la résistance théorique. Cette amélioration est particulièrement marquée dans cet exemple lorsque le dosage de floculant est de 32 g par kg de boue sèche.

### Exemple 6 : effet de l'origine botanique

Trois solutions d'origine botanique différentes sont préparées avec un mode opératoire et un niveau de cationicité équivalents, afin d'obtenir un pourcentage d'azote fixé égal à 3%.

Le maïs *waxy* présente une forte proportion d'amylopectine, tandis que le pois est plus riche en amylose que la pomme de terre.

Ces solutions sont testées en Jar-Test comme floculant pour la boue de l'exemple 1, conjointement avec la solution de PAM, avec un rapport R de 0,8, pour un total de 18 g/kg de boue sèche. Un test de référence est réalisé avec le polyacrylamide seul à une dose équivalente, soit 3,6g/kg de boue sèche. Le protocole est le même que dans l'exemple 1. Les résultats sont donnés dans le tableau 10.

**Tableau 10**

| Origine de l'amidon | Flocs bécher | Flocs tamis | Turbidité du filtrat (UTN) | % de flocs dans le filtrat | Volume de filtrat (ml/s) | | |
|---|---|---|---|---|---|---|---|
| | | | | | 10s | 30s | 300s |
| Sans amidon | 2 | 1 | 70 | 57 | 150 | 190 | 300 |
| Maïs waxy | 7 | 7 | 16 | 6 | 190 | 250 | 305 |
| Pomme de terre | 8 | 5 | 14 | 6 | 260 | 290 | 315 |
| Pois | 5 | 4 | 13 | 10 | 265 | 295 | 325 |

La floculation est bonne, et ceci quelle que soit l'origine botanique de l'amidon.

Toutefois, l'utilisation de pomme de terre dans le procédé permet d'obtenir de légèrement meilleurs résultats que l'utilisation de pois ou le maïs waxy. En effet, avec la base pomme de terre, la quantité de flocs traversant le tamis est moindre par rapport au pois, tandis que la vitesse de filtration est plus élevée que pour la base maïs waxy.

## Revendications

1. Procédé d'épaississement ou de déshydratation d'une boue comprenant au moins :
a) une étape d'addition de floculants dans la boue à traiter ;
b) une étape de floculation par agitation de la boue ainsi additionnée pour former un mélange de flocs et d'une solution aqueuse ;
c) une étape de séparation mécanique des flocs et de la solution aqueuse formés à l'étape précédente ;
d) une étape de récupération de la solution aqueuse et des flocs formant une boue traitée ;
**caractérisé en ce que** :
• les floculants additionnés sont constitués d'au moins un amidon cationique (A) et d'au moins un polyacrylamide cationique (P) ;
• le ou les amidons cationiques (A) comprennent un pourcentage massique en azote fixé d'au moins 2,5 % ;
• et le rapport des masses (R) m_{A}/(m_{A}+m_{P}) exprimées en masse sèche, est compris entre 0,6 et 0,95.

2. Procédé selon l'une des revendications précédentes **caractérisé en ce que** R est compris entre 0,7 et 0,95.

3. Procédé selon l'une des revendications précédentes **caractérisé en ce que** R est compris entre 0,85 et 0,95.

4. Procédé selon l'une des revendications précédentes **caractérisé en ce que** R est compris entre 0,87 et 0,95.

5. Procédé selon l'une des revendications précédentes **caractérisé en ce que** l'amidon cationique (A) présente un pourcentage massique en azote allant de 2,5 à 5%.

6. Procédé selon l'une des revendications précédentes **caractérisé en ce que** l'amidon cationique est obtenu à partir d'amidon de maïs, de blé, de maïs waxy ou à partir de fécule de pomme de terre, préférentiellement à partir de fécule de pomme de terre.

7. Procédé selon l'une des revendications précédentes **caractérisé en ce que** l'amidon cationique est additionnée par l'intermédiaire d'une composition amylacée liquide comprenant au moins un amidon cationique.

8. Procédé selon l'une des revendications précédentes **caractérisé en ce que** l'amidon cationique et le polyacrylamide cationique sont additionnés séparément lors de l'étape a).

9. Procédé selon l'une des revendications 1 à 7 **caractérisé en ce que** l'amidon cationique et le polyacrylamide cationique sont additionnés simultanément lors de l'étape a).

10. Procédé selon la revendication 9 **caractérisé en ce que** l'amidon cationique et le polyacrylamide cationique sont additionnés simultanément par l'intermédiaire d'une composition liquide comprenant au moins un amidon cationique et au moins un polyacrylamide.

11. Procédé selon l'une des revendications précédentes **caractérisé en ce que** le polyacrylamide a un niveau de cationicité allant de 500 à 5000 µeq/g, de préférence de 2000 à 4500 µeq/g, par mesure d'ionicité à l'aide d'un détecteur de flux de type *Streaming Current Detector* (SCD), par titration à l'aide de polyéthylènesulfonate de sodium.

12. Procédé selon l'une des revendications précédentes **caractérisé en ce que** la quantité totale d'amidon cationique et de polyacrylamide en masse sèche va de 1 à 50 g/kg de boue à traiter (sec/sec), avantageusement de 3 à 35 g/kg (sec/sec), préférentiellement de 4 à 20 g/kg (sec/sec).

13. Procédé selon l'une des revendications précédentes **caractérisé en ce que** la boue à traiter a subi un prétraitement à l'aide d'agents coagulants, par exemple à l'aide de sels métalliques.

14. Procédé selon l'une des revendications précédentes **caractérisé en ce que** la boue à traiter à l'étape a) est issue de boues industrielles, notamment de boues issues de l'industrie agroalimentaire telles que les boues issues d'amidonnerie, de papeteries, d'industries chimiques, ou d'effluents urbains.

15. Procédé selon l'une des revendications précédentes **caractérisé en ce qu'**au moins une étape de séparation mécanique c) est réalisée en traitant la boue floculée par passage sur une table d'égouttage et/ou par flottation de la boue.

16. Procédé selon l'une des revendications précédentes **caractérisé en ce qu'**au moins une étape de séparation mécanique c) est réalisée en traitant la boue floculée par centrifugation et/ou par passage sur filtre presse.

17. Procédé selon l'une des revendications précédentes **caractérisé en ce que** la boue traitée obtenue à l'étape d) présente une siccité d'au moins 4%, avantageusement d'au moins 15%, préférentiellement au moins 20%.

18. Composition comprenant au moins un amidon cationique (A) et au moins un polyacrylamide cationique (P) dans laquelle le ou les amidons cationiques (A) comprennent un pourcentage massique en azote fixé d'au moins 2,5 % et dont le rapport des masses (R) m_{A}/(m_{A}+m_{P}) exprimées en masse sèche, est compris entre 0,6 et 0,95.

## Patentansprüche

1. Verfahren zur Verdickung oder Entwässerung von Schlamm, mindestens umfassend:
a) einen Schritt der Zugabe von Flockungsmitteln in den zu behandelnden Schlamm:
b) einen Schritt der Flockung durch Rühren des so additivierten Schlamms, um ein Gemisch von Flocken und einer wässrigen Lösung zu bilden;
c) einen Schritt des mechanischen Trennens der Flocken und der wässrigen Lösung, welche im vorhergehenden Schritt gebildet wurden;
d) einen Schritt der Rückgewinnung der wässrigen Lösung und der Flocken, die einen behandelten Schlamm bilden;
**dadurch gekennzeichnet, dass**:
- die zugegebenen Flockungsmittel aus mindestens einer kationischen Stärke (A) und mindestens einem kationischen Polyacrylamid (P) bestehen;
- die kationische Stärke oder kationischen Stärken (A) mindestens 2,5 Gew.-% gebundenen Stickstoff enthalten;
- und das Massenverhältnis (R) m_{A}/(m_{A}+m_{P}), angegeben als Trockenmasse, zwischen 0,6 und 0,95 ist.

2. Verfahren nach einem der vorhergehenden Ansprüche, **dadurch gekennzeichnet, dass** R zwischen 0,7 und 0,95 ist.

3. Verfahren nach einem der vorhergehenden Ansprüche, **dadurch gekennzeichnet, dass** R zwischen 0,85 und 0,95 ist.

4. Verfahren nach einem der vorhergehenden Ansprüche, **dadurch gekennzeichnet, dass** R zwischen 0,87 und 0,95 ist.

5. Verfahren nach einem der vorhergehenden Ansprüche, **dadurch gekennzeichnet, dass** die kationische Stärke (A) Stickstoff im Bereich von 2,5 bis 5 Gew.-% aufweist.

6. Verfahren nach einem der vorhergehenden Ansprüche, **dadurch gekennzeichnet, dass** die kationische Stärke aus Maisstärke, Weizenstärke, Waxy-Mais oder aus Kartoffelstärke, vorzugsweise aus Kartoffelstärke, erhalten wird.

7. Verfahren nach einem der vorhergehenden Ansprüche, **dadurch gekennzeichnet, dass** die kationische Stärke additiviert wird durch eine stärkehaltige flüssige Zusammensetzung, die mindestens eine kationische Stärke enthält.

8. Verfahren nach einem der vorhergehenden Ansprüche, **dadurch gekennzeichnet, dass** die kationische Stärke und das kationische Polyacrylamid getrennt in Schritt a) zugegeben werden.

9. Verfahren nach einem der Ansprüche 1 bis 7, **dadurch gekennzeichnet, dass** die kationische Stärke und das kationische Polyacrylamid gleichzeitig in Schritt a) zugegeben werden.

10. Verfahren nach Anspruch 9, **dadurch gekennzeichnet**, das die kationische Stärke und das kationische Polyacrylamid gleichzeitig mittels einer flüssigen Zusammensetzung zugegeben werden, die mindestens eine kationische Stärke und mindestens ein Polyacrylamid enthält.

11. Verfahren nach einem der vorhergehenden Ansprüche, **dadurch gekennzeichnet, dass** das Polyacrylamid eine Kationizität im Bereich von 500 bis 5000 µeq/g, vorzugsweise von 2000 bis 4500 µeq/g, aufweist, gemäß Messung der lonizität mit einem Durchflussdetektor des Typs *Streaming Current Detector* (SCD), bei Titration mit Natriumpolyethylensulfonat.

12. Verfahren nach einem der vorhergehenden Ansprüche, **dadurch gekennzeichnet, dass** die Gesamtmenge aus kationischer Stärke und Polyacrylamid bezüglich der Trockenmasse von 1 bis 50 g/kg des zu behandelnden Schlamms (Trockensubstanz/Trockensubstanz), vorteilhafterweise von 3 bis 35 g/kg (Trockensubstanz/Trockensubstanz), vorzugsweise von 4 bis 20 g/kg (Trockensubstanz/Trockensubstanz) ist.

13. Verfahren nach einem der vorhergehenden Ansprüche, **dadurch gekennzeichnet, dass** der zu behandelnde Schlamm einer Vorbehandlung mit einem Koagulationsmittel, zum Beispiel mit Metallsalzen, unterzogen wurde.

14. Verfahren nach einem der vorhergehenden Ansprüche, **dadurch gekennzeichnet, dass** der in Schritt a) zu behandelnde Schlamm von Industrieschlämmen stammt, insbesondere Schlämmen, die aus der Nahrungsmittelindustrie, wie etwa die Schlämme aus der Stärkegewinnung, die aus der Papierindustrie, der chemischen Industrie oder aus kommunalem Abwasser stammen.

15. Verfahren nach einem der vorhergehenden Ansprüche, **dadurch gekennzeichnet, dass** mindestens ein Schritt der mechanischen Trennung c) durch Behandlung des ausgeflockten Schlamms durch Leiten über einen Entwässerungstisch und/oder durch Flotation des Schlamms erfolgt.

16. Verfahren nach einem der vorhergehenden Ansprüche, **dadurch gekennzeichnet, dass** mindestens ein Schritt der mechanischen Trennung c) durch Behandlung des ausgeflockten Schlamms durch Zentrifugation und/oder Durchgang durch eine Filterpresse erfolgt.

17. Verfahren nach einem der vorhergehenden Ansprüche, **dadurch gekennzeichnet, dass** der in Schritt d) erhaltene behandelte Schlamm einen Trockengehalt von mindestens 4 %, bevorzugt mindestens 15 %, vorzugsweise mindestens 20 % aufweist.

18. Zusammensetzung, umfassend mindestens eine kationische Stärke (A) und mindestens ein kationisches Polyacrylamid (P), worin die kationische(n) Stärke(n) (A) 2,5 Gew.-% gebundenen Stickstoff umfassen und deren Massenverhältnis (R) m_{A}/(m_{A}+m_{P}), angegeben als Trockenmasse, zwischen 0,6 und 0,95 ist.

## Claims

1. A process for thickening or dehydrating sludge, comprising at least:
a) a step of adding flocculants to the sludge to be treated;
b) a step of flocculating by stirring the sludge added to in this way so as to form a mixture of flocs and an aqueous solution;
c) a step of mechanical separation of the flocs and the aqueous solution that were formed in the previous step;
d) a step of recovering the aqueous solution and the flocs forming a treated sludge;
**characterized in that**:
• the flocculants added consist of at least one cationic starch (S) and at least one cationic polyacrylamide (P);
• the cationic starch(es) (S) comprise a fixed nitrogen weight percent of at least 2.5 %;
• and the weight ratio (R) w_{S}/(w_{S}+w_{P}) expressed as dry weight is between 0.6 and 0.95.

2. The process as claimed in claim 1, **characterized in that** R is between 0.7 and 0.95.

3. The process as claimed in any one of the preceding claims, **characterized in that** R is between 0.85 and 0.95.

4. The process as claimed in any one of the preceding claims, **characterized in that** wherein R is between 0.87 and 0.95.

5. The process as claimed in any one of the preceding claims, **characterized in that** the cationic starch (S) has a nitrogen weight percent ranging from 2.5 to 5 %.

6. The process as claimed in any one of the preceding claims, **characterized in that** the cationic starch is obtained from corn starch, wheat starch, waxy corn starch or from potato flour, preferably from potato flour.

7. The process as claimed in any one of the preceding claims, **characterized in that** the cationic starch is added by way of a liquid amylaceous composition comprising at least one cationic starch.

8. The process as claimed in any one of the preceding claims, **characterized in that** the cationic starch and the cationic polyacrylamide are added separately during step a).

9. The process as claimed in any one of claims 1 to 7, **characterized in that** the cationic starch and the cationic polyacrylamide are added simultaneously during step a).

10. The process as claimed in claim 9, **characterized in that** the cationic starch and the cationic polyacrylamide are added simultaneously by way of a liquid composition comprising at least one cationic starch and at least one polyacrylamide.

11. The process as claimed in any one of the preceding claims, **characterized in that** the polyacrylamide has a degree of cationicity ranging from 500 to 5000 µeq/g, preferably from 2000 to 4500 µeq/g, by ionicity measurement using a flow detector of the Streaming Current Detector (SCD) type, by titration using sodium polyethylene sulfonate.

12. The process as claimed in any one of the preceding claims, **characterized in that** the total quantity of cationic starch and polyacrylamide as dry weight ranges from 1 to 50 g/kg of sludge to be treated (dry/dry), advantageously from 3 to 35 g/kg (dry/dry), preferably from 4 to 20 g/kg (dry/dry).

13. The process as claimed in any one of the preceding claims, **characterized in that** the sludge to be treated has undergone pretreatment using coagulants, for example using metal salts.

14. The process as claimed in any one of the preceding claims, **characterized in that** the sludge to be treated in step a) comes from industrial sludge, notably sludge coming from the food-processing industry such as sludge coming from the starch industry, paper-making industry, chemical industry or from municipal effluent.

15. The process as claimed in any one of the preceding claims, **characterized in that** at least one step of mechanical separation c) is carried out by treatment of the flocculated sludge by passing over a draining table and/or by flotation of the sludge.

16. The process as claimed in any one of the preceding claims, **characterized in that** at least one step of mechanical filtration c) is carried out by treatment of the flocculated sludge by centrifugation or by passing over a filter press.

17. The process as claimed in any one of the preceding claims, **characterized in that** the treated sludge obtained in step d) has a level of dryness of at least 4 %, advantageously at least 15 %, preferably at least 20 %.

18. A composition comprising at least one cationic starch (S) and at least one cationic polyacrylamide (P), in which composition the cationic starch(es) (S) comprise a fixed nitrogen weight percent of at least 2.5 % and the weight ratio (R) wS/(wS+wP) of which, expressed as dry weight, is between 0.6 and 0.95.
